# EUROPÄISCHE PATENTSCHRIFT

(11) **EP 1 089 055 B1**
(45) Veröffentlichungstag und Bekanntmachung des Hinweises auf die Patenterteilung: **26.06.2002**
(21) Anmeldenummer: 00120609.3
(22) Anmeldetag: 21.09.2000
(51) Int. Cl.: G01B 21/22

(54) **Verfahren zum Vermessen der gegenseitigen Orientierung eines Hohlzylinders und einer zugeordneten Schnittfläche**
Method for measuring the relative orientation of a hollow cylinder and an associated plane cut
Méthode pour l'orientation relative d'un cylindre creux et une surface de coupe associée

(30) Priorität: 01.10.1999 DE 19947292
(43) Veröffentlichungstag der Anmeldung: 04.04.2001
(73) Patentinhaber: Prüftechnik Dieter Busch AG, 85737 Ismaning (DE)
(72) Erfinder: Hermann, Michael, 78050 Villingen-Schwenningen (DE)

(56) Entgegenhaltungen:
- DE-A- 19 546 405
- US-A- 5 038 485
- US-A- 5 801 303
- PATENT ABSTRACTS OF JAPAN vol. 1998, no. 11, 30. September 1998 (1998-09-30) -& JP 10 160433 A (NIPPON STEEL CORP), 19. Juni 1998 (1998-06-19)

## Beschreibung

Die Erfindung betrifft eine Vorrichtung und ein Verfahren zum Vermessen der gegenseitigen Orientierung eines Hohlzylinders und einer ihm zugeordneten Schnittfläche.
Ein diesbezügliches Messproblem tritt beispielsweise bei der Überprüfung eines Zylinders einer Verbrennungskraftmaschine auf, insbesondere bei grossvolumigen Dieselmotoren. Typische Dimensionen der Zylinder solcher Motoren liegen im Dezimeterbis Meterbereich. Die hochgenaue Erfassung der Relativlage zwischen Zylinderwandung und einer Schnittfläche, welche durch eine Endfläche eines solchen Hohlzylinders definiert wird, gestaltet sich bei geringen Wandstärken des zugehörigen Massivmaterials als schwierig und aufwendig.

Aus der DE 195 46 405 ist ein Verfahren bekannt, bei dem ein Laser-Gyroskop zur Messung der relativen Winkellage mehreren aufeinander auszurichtenden Körpern angesetzt wird und bei jeder Messung zwei Winkeldaten liefert. Die Winkeldaten werden an einen Rechner zum Vergleich und zur Bestimmung von Korrekturwerten, d.h. Abweichungen oder Fehlwinkel, weitergeleitet.

Es ist Aufgabe der Erfindung, ein Messverfahren und eine zugehörige Messvorrichtung anzugeben, mit welcher Messungen der vorgenannten Art in sehr kurzer Zeit durchgeführt werden können, und welche auch bei räumlich beliebiger Orientierung des Hohlzylinders durchgeführt werden können. Diese Aufgabe wird durch die Merkmale des Anspruchs 1 gelöst.

Zum Beispiel kann in vergleichbarer Weise auch die Orientierung zweier oder mehrerer Hohlzylinder (insbesondere Zylinder von Dieselmotoren) zueinander dadurch ermittelt werden, dass das Laser Gyroskop zumindest jeweils einmal in Kontakt mit der Wandung eines Hohlzylinders gebracht wird und auf diese Weise dessen Orientierung zu einem vorher bestimmten Laborkoordinatensystem ermittelt wird, und in einem nachfolgenden Schritt die Orientierungen der vermessenen Hohlzylinder miteinander verglichen werden. Hierbei kann nicht nur auf Parallelität der Hohlzylinder-Achsen getestet werden, sondern auch die Einhaltung eines vorgegebenen Winkelmasses, wie zum Beispiel 60° überprüft werden.

Die Erfindung geht von der Erkenntnis aus, dass Messungen der vorgenannten Art im Prinzip Winkelmessungen sind, für die anstelle mechanischer Messmittel besser solche auf elektronischer Basis herangezogen werden sollten.

Gemäss der Erfindung gelingt die Lösung des dargestellten Messproblems dadurch, dass ein hochgenaues optisches Gyroskop eingesetzt wird, und zwar bevorzugt in Form eines sogenannten Laser-Gyroskops, dessen Präzision derzeit unübertroffen ist. Es empfiehlt sich, ein dreiachsiges Gyroskop dieser Art vorzusehen, obwohl für einfachere Messaufgaben der genannten Art auch zweiachsig wirkende Gyroskope verwendet werden können.

Die Einzelheiten der Erfindung werden im folgenden anhand der Zeichnung beschrieben. Es zeigt:
Fig. 1 eine erste perspektivische Ansicht auf einen Hohlzylinder und angesetztes Messinstrument, in einer ersten Messphase
Fig. 2 eine zweite perspektivische Ansicht auf einen Hohlzylinder undangesetz-tes-Messinstrument, in einer zweiten Messphase
Fig. 3 ein mit Messkanten versehenes Messgerät sowie in einer Aufsicht dessen Verwendung beim Kontaktieren von Hohlzylinderflächen und zugehörigen Stirnflächen

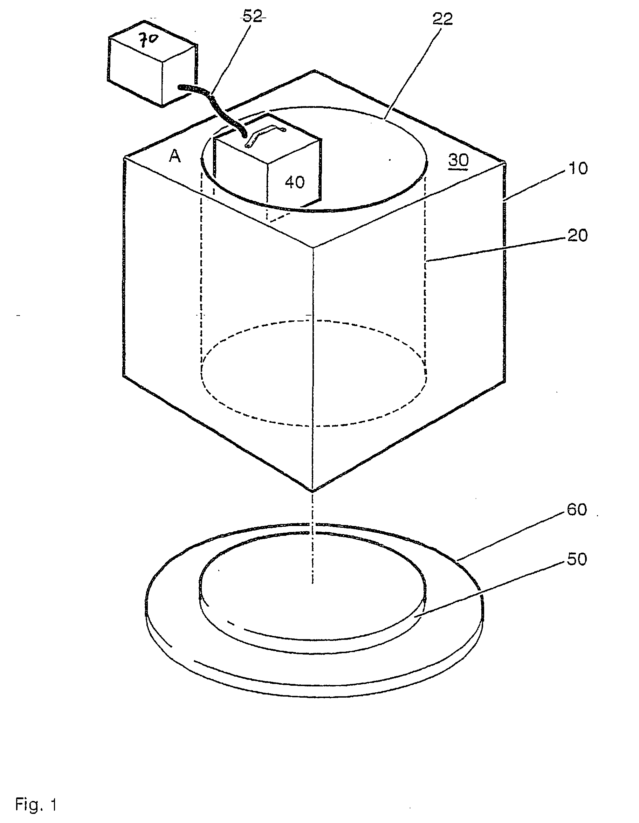

Der in Fig. 1 dargestellte Hohlzylinder 20 befindet sich in einem Block 10 aus Massivmaterial. Eine zugeordnete obere Schnittfläche A (Bezugsziffer 30) wird durch die Peripherie 22 des Hohlzylinders definiert. Von der Flächennormale dieser Schnittfläche A wird verlangt, dass sie mit grösstmöglicher Präzision parallel zur Längsachse des Hohlzylinders 20 ausgerichtet ist. Die Überprüfung dieses Schachverhaltes gestaltet sich bei Verwendung des erfindungsgemässen Verfahrens unter Einsatz eines Laser-Gyroskopes erstaunlich einfach und erfordert nur ein Minimum an Zeit, mit typischen Zeiteinsparungen von 95% bis 99% im Vergleich zu vorherigen Messverfahren. Wie in Fig. 1 gezeigt, wird in einem ersten Messschritt ein Laser-Gyroskop 40 von innen her an die Mantelfläche des Hohlzylinders 20 angesetzt, und durch Auslösen einer (ersten) Messwertnahme dessen Orientierung im Raum festgehalten. Die Registrierung der Orientierungswerte kann im Gyroskop 40 selbst erfolgen, oder im zugehörigen Rechner 70, welcher gleichzeitig eine Energieversorgung für das Gyroskop bereitstellt (siehe schematisch gezeichnetes Verbindungskabel 52). In jedem Fall ist dafür gesorgt, dass die erfassten Messwerte zu einem späteren Zeitpunkt ausgegeben werden können, z.B. per Sichtschirm oder elektronischer Datenübertragung. - Schritt eins wird zur Steigerung der Messgenauigkeit mit Vorteil mehrfach wiederholt, insbesondere an verschiedenen Stellen des Hohlzylindermantels.

In einem zweiten Schritt wird der Laserkreisel 40 sodann aus dem Hohlzylinder herausgenommen.

In einem dritten Schritt wird eine hochgenau gefertige Auflage 60 auf die obere Schnittfläche 30 gelegt. Die Auflage 60 besitzt eine Deckplatte mit planparallelen Oberflächen und ist bevorzugt aus Glaskeramik mit sehr geringem Temperaturausdehnungskoeffizienten gefertigt, sie kann aber auch aus Spiegelglas gefertigt sein. Darüberhinaus ist an der Auflage 60 eine Bodenplatte 50 aus demselben Material angebracht, welche jedoch nur Zentrierfunktionen hat und ein zentrisches Einlegen der Auflage 60 auf die endständige Peripherie 22 des Hohlzylinders 20 ermöglicht.

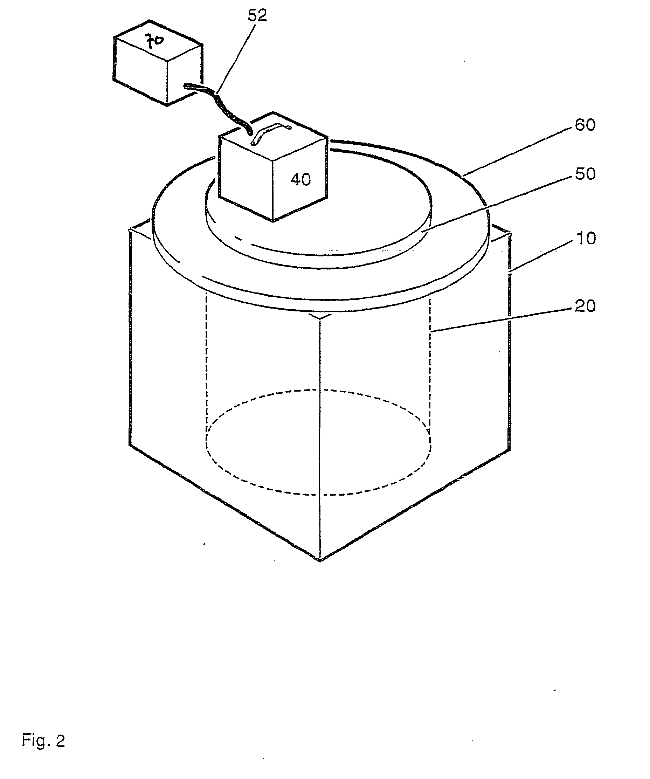

In einem vierten Schritt wird der Laserkreisel mit seiner Bodenseite, wie in Fig. 2 gezeigt, in präziser Weise auf die Auflage 60 aufgesetzt. Daraufhin wird in einem fünften Schritt eine (zweite) Messwertnahme durch den Laserkreisel ausgelöst.

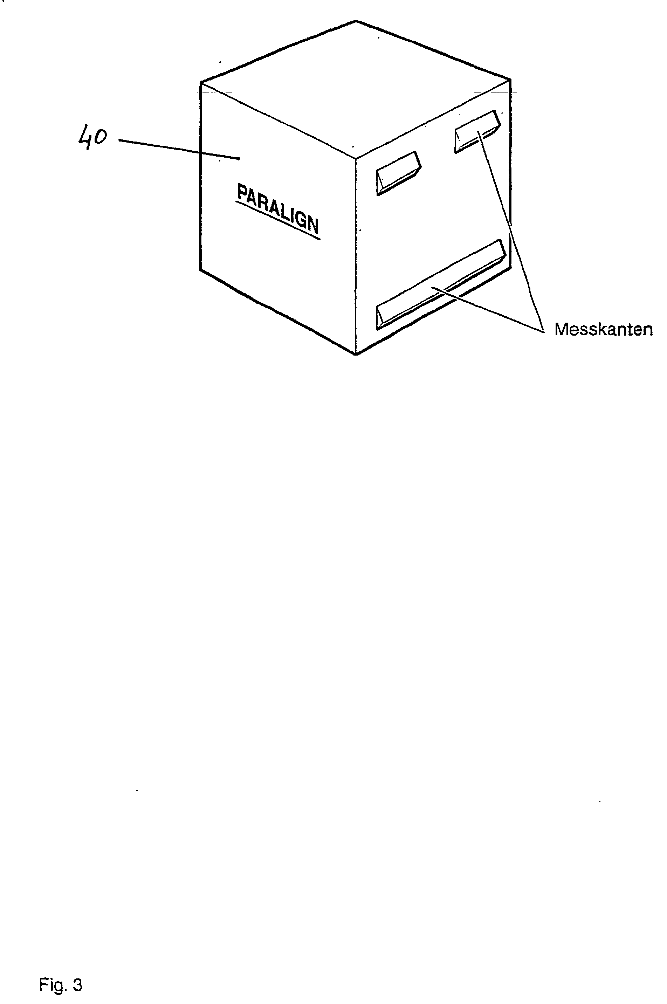

Zum Zwecke einer besonders präzisen Messwertnahme kann das den Laserkreisel enthaltende Messgerät ein Gehäuse aufweisen, welches mit geeigneten hochpräzise gefertigten Messkanten versehen ist (Fig.3).

In einem sechsten Schritt werden sodann die auf diese Weise erhaltenen ersten und zweiten Messwerte miteinander verglichen. Durch den Rechner 70 kann praktisch sofort errechnet und signalisiert werden, ob und in welche Richtungen ein Fehlwinkel der Schnittfläche 30 (z.B. eine Zylinderkopf-Kontaktfläche) gegenüber der durch die Hohlzylinderwand definierten Längsachse des Hohlzylinders vorliegt. Diese Messresultate können mit der erforderlichen Präzision dargestellt werden, und zwar mit einer Genauigkeit von weit besser als einem Zehntelgrad.

Die Erfindung kann auch dazu herangezogen werden, die Schnittlinien oder Endflächen an anderen grossdimensionierten Hohlzylindern zu überprüfen.

## Patentansprüche

1. Verfahren zur messtechnischen Erfassung der gegenseitigen Orientierung eines Hohlzylinders und einer diesem zugeordneten Schnittfläche, bei dem in einem ersten Verfahrensschritt ein
*hochgenau arbeitendes*
Laser-Gyroskop (40) exakt an die Innenwand eines Hohlzylinders (20) angelegt wird,
in einem zweiten Verfahrensschritt die räumliche Orientierung des Laser-Gyroskops (40) nach zumindest zwei Winkelkoordinaten relativ zu einem Laborsystem elektronisch registriert und als ein erstes Messergebnis gespeichert wird, in einem dritten
Verfahrensschritt eine
*hochgenau gefertigte*
Auflage (60) auf die Schnittfläche (30) aufgesetzt wird, in einem vierten Verfahrensschritt das Laser-Gyroskop unter Zuhilfenahme *der* Auflage (60) indirekt auf die Schnittfläche (30) aufgesetzt wird,
in einem fünften Verfahrensschritt erneut die räumliche Orientierung des Laser-Gyroskops (40) nach zumindest zwei Winkelkoordinaten relativ zu einem Laborsystem elektronisch registriert und als ein zweites Messergebnis gespeichert wird, in einem sechsten Verfahrensschritt die gespeicherten ersten und zweiten Messergebnisse miteinander verglichen werden und der Wert eines ermittelten Fehlwinkels visualisiert oder in anderer Form, insbesondere akustisch, dargestellt wird.

## Claims

1. Method for measuring the mutual orientation of a hollow cylinder and of a plane section which is assigned thereto, in which, in a first method step, a highly precisely operating laser gyroscope (40) is positioned precisely against the inner wall of a hollow cylinder (20),
in a second method step the spatial orientation of the laser gyroscope (40) is recorded electronically in accordance with at least two angular coordinates in relation to a laboratory system and is stored as a first measurement result,
in a third method step a highly precisely fabricated support (60) is fitted onto the plane section (30),
in a fourth method step the laser gyroscope is fitted indirectly onto the plane section (30) using the support (60),
in a fifth method step the spatial orientation of the laser gyroscope (40) is recorded electronically again in accordance with at least two angular coordinates in relation to a laboratory system and stored as a second measurement result,
in a sixth method step the stored first and second measurement results are compared with one another and the value of a displacement angle which is determined is displayed or represented in some other form, in particular audibly.

## Revendications

1. Procédé pour la détermination, par une méthode de mesure, de l'orientation relative d'un cylindre creux et d'une surface de coupe associée à celui-ci, dans lequel
dans une première étape du procédé, un gyroscope à laser (40)
travaillant avec grande précision
est posé exactement sur la paroi interne d'un cylindre creux (20),
dans une deuxième étape du procédé, l'orientation spatiale du gyroscope à laser (40) suivant au moins deux coordonnées angulaires par rapport à un système du laboratoire est enregistrée par voie électronique et mémorisée comme premier résultat de mesure,
dans une troisième étape du procédé, une applique (60)
fabriquée avec grande précision
est déposée sur la surface de coupe (30),
dans une quatrième étape du procédé, le gyroscope à laser (40) est déposé indirectement sur la surface de coupe (30) par l'intermédiaire de l'applique (60),
dans une cinquième étape du procédé, l'orientation spatiale du gyroscope à laser (40) suivant au moins deux coordonnées angulaires par rapport à un système du laboratoire est à nouveau enregistrée par voie électronique et mémorisée comme deuxième résultat de mesure,
dans une sixième étape du procédé, les premier et deuxième résultats de mesure sont comparés l'un à l'autre, et la valeur d'un angle d'erreur détecté est visualisée ou représentée sous une autre forme, en particulier sous forme acoustique.
